# FASCICULE DE BREVET EUROPEEN

(11) **EP 1 784 609 B1**
(45) Date de publication et mention de la délivrance du brevet: **06.06.2012**
(21) Numéro de dépôt: 05798500.4
(22) Date de dépôt: 22.08.2005
(51) Int. Cl.: C02F 11/12

(54) **DISPOSITIF POUR LE RETOURNEMENT ET LA TRANSLATION D'UN MATERIAU PATEUX OU GRANULEUX**
VORRICHTUNG ZUM DREHEN ODER ÜBERSETZEN VON EINEM ZÄHFLÜSSIGEM ODER GEKÖRNTEM MATERIAL
DEVICE FOR TURNING AND TRANSLATING A PASTY OR GRANULAR MATERIAL

(30) Priorité: 24.08.2004 FR 0409069
(43) Date de publication de la demande: 16.05.2007
(73) Titulaire: DEGREMONT, 92508 Rueil-Malmaison Cédex (FR)
(72) Inventeur: LUBOSCHIK, Ulrich, Kandern-Wollbach (DE)
(74) Mandataire: Michardière, Bernard
(86) Numéro de dépôt international: PCT/FR2005/002119
(87) Numéro de publication internationale: WO 2006/024794

(56) Documents cités:
- EP-A- 1 150 083
- DE-A1- 4 315 321
- DE-U1- 29 814 380
- FR-A- 1 008 631
- FR-A- 2 178 280
- FR-A- 2 843 958

## Description

L'invention est relative à un dispositif pour le retournement et la translation d'un matériau pâteux ou granuleux épandu en couche, dispositif du genre de ceux qui comportent un arbre rotatif supporté au-dessus de la couche, transversalement à la direction de translation du matériau, et un moyen de retournement et de déplacement du matériau, entraîné en rotation par l'arbre.

L'invention concerne plus particulièrement, mais non exclusivement, un tel dispositif pour des boues provenant de stations d'épuration d'eaux résiduaires urbaines ou industrielles.

Il est connu, avec les procédés mécaniques tels les filtres presses, filtres bandes ou les centrifugeuses, que les boues organiques humides, notamment les boues issues du traitement des eaux usées urbaines et industrielles, ne peuvent être déshydratées que jusqu'à une valeur limite déterminée. Ainsi, le taux de matière sèche est généralement compris entre 15 et 30% de siccité. La quantité considérable d'eau résiduelle est, en conséquence, soit évacuée à coût élevé avec les boues, soit éliminée thermiquement.

Différents procédés et dispositifs de séchage des matériaux humides sont connus. Les sécheurs thermiques par contact, par confection, par rayonnement, à couches minces et à lit fluidisé sont les procédés industriels les plus utilisés. Comme ces procédés consomment de grandes quantités d'énergie, des systèmes de séchage solaire ont été progressivement développés et prennent une part de plus en plus importante du marché du séchage des boues.

Dans les réalisations de séchage solaire connues à ce jour, par exemple d'après DE 43 15 321 ou d'après WO 2004/020922, les boues sont épandues sous une serre et un dispositif assure leur retournement, voire leur transport dans ladite serre.

Le document FR 1008631 décrit une machine agricoles pour retourner la terre en ayant recours, d'une part, à un arbre transversal entraîné par un moteur et portant plusieurs rangées de fourchons ou dents courbes telles, qu'elles coupent et soulèvent des mottes de terre tout en assurant l'avancement de la machine.

En raison de la thixotropie, et pour des teneurs en matières sèches (MS) inférieures à 25%, on a constaté que, fréquemment brassées et retournées, les boues ont tendance à coller au moyen de retournement du dispositif et à devenir pâteuses. Cette pâte présente une résistance au cisaillement élevée qui augmente considérablement la puissance nécessaire pour retourner les boues ; de plus, l'aération de la masse de boues est perturbée par cet épaississement, ce qui provoque l'installation d'un processus anaérobie, générateur de mauvaises odeurs qui peuvent fortement perturber l'exploitation de l'installation de séchage.

L'invention a pour but, surtout, de fournir un dispositif qui ne présente plus, ou à un degré moindre, les inconvénients évoqués ci-dessus et qui permet notamment de diminuer le caractère pâteux des boues et ainsi de réduire les efforts nécessaires et l'énergie consommée pour entraîner le dispositif.

Selon l'invention, un dispositif pour le retournement d'un matériau pâteux ou granuleux épandu en couche, en particulier de boues provenant de stations d'épuration d'eaux résiduaires urbaines ou industrielles, du genre défini précédemment, est caractérisé en ce qu'il comporte au moins un moyen de coupe de la couche de matériau, maintenu à distance radiale de l'arbre rotatif et entraîné en rotation par cet arbre, ce moyen de coupe étant situé sensiblement sur une surface cylindrique ayant même axe géométrique que l'arbre rotatif, et étant propre à assurer lors de sa pénétration dans la couche, la fragmentation de cette dernière, tandis que le moyen de retournement fait granuler et progresser le matériau découpé.

L'invention entraîne une réduction pouvant atteindre jusqu'à 20% des efforts de rotation de l'arbre et permet une bonne granulation de la boue.

Le moyen de coupe comprend au moins une lame de coupe dont le plan est sensiblement tangent à ladite surface cylindrique.

La lame de coupe présente de préférence un tranchant sur chacun de ses bords longitudinaux sensiblement parallèles à l'arbre rotatif.
Généralement, des disques orthogonaux à l'arbre rotatif sont solidaires de cet arbre et espacés suivant la direction de l'axe géométrique, et chaque lame de coupe est fixée sur le pourtour des disques tangentiellement à la surface cylindrique enveloppant ces disques. Chaque lame de coupe peut comporter une section transversale symétrique. Le moyen de retournement peut comprendre au moins un peigne gratteur. De préférence, le peigne gratteur est disposé en arrière de la lame de coupe selon le sens de rotation de l'arbre rotatif. Le peigne gratteur peut être monté perpendiculairement à la surface cylindrique ou selon un angle qui peut varier jusqu'à 90°. Le peigne gratteur peut comporter un bord radial extérieur denté ou ondulé selon la granulation souhaitée et la surface d'échange air - matériau recherchée.
La ou les lames de coupe peuvent être disposées en biais par rapport à l'axe géométrique de l'arbre, de même que les peignes gratteurs. Une symétrie de montage des lames et peignes gratteurs est prévue pour assurer une translation rectiligne du matériau. Les lames de coupe et les peignes gratteurs prévus dans des segments successifs situés entre des disques orthogonaux à l'arbre rotatif peuvent être décalés angulairement les uns par rapport aux autres.
Le dispositif peut comporter un automate commandant notamment les vitesse de rotation et de translation des lames de coupe et des peignes gratteurs, et l'épaisseur de matériau découpée par les lames de coupe est réglée par l'automate.

L'invention consiste, mises à part les dispositions exposées ci-dessus, en un certain nombre d'autres dispositions dont il sera plus explicitement question ci-après à propos d'exemples de réalisation décrits avec références aux dessins annexés, mais qui ne sont nullement limitatifs. Sur ces dessins :
Fig. 1 est une coupe verticale schématique d'un dispositif de retournement selon l'invention, en cours de travail sur une couche de boue.
Fig.2 est une vue schématique en perspective d'une variante de réalisation du dispositif de retournement.
Fig. 3 est une section transversale à plus grande échelle d'une lame de coupe à deux tranchants.
Fig. 4 et 5 sont des sections transversales de variantes de réalisation de lame de coupe.
Fig. 6 est un schéma illustrant diverses positions possibles du moyen de retournement.
Fig. 7 à 10 sont des vues en plan de diverses réalisations de peigne gratteur constituant le moyen de retournement, et
Fig.11 est une vue schématique en perspective d'une autre variante de réalisation du dispositif, le moyen de retournement n'étant pas représenté.

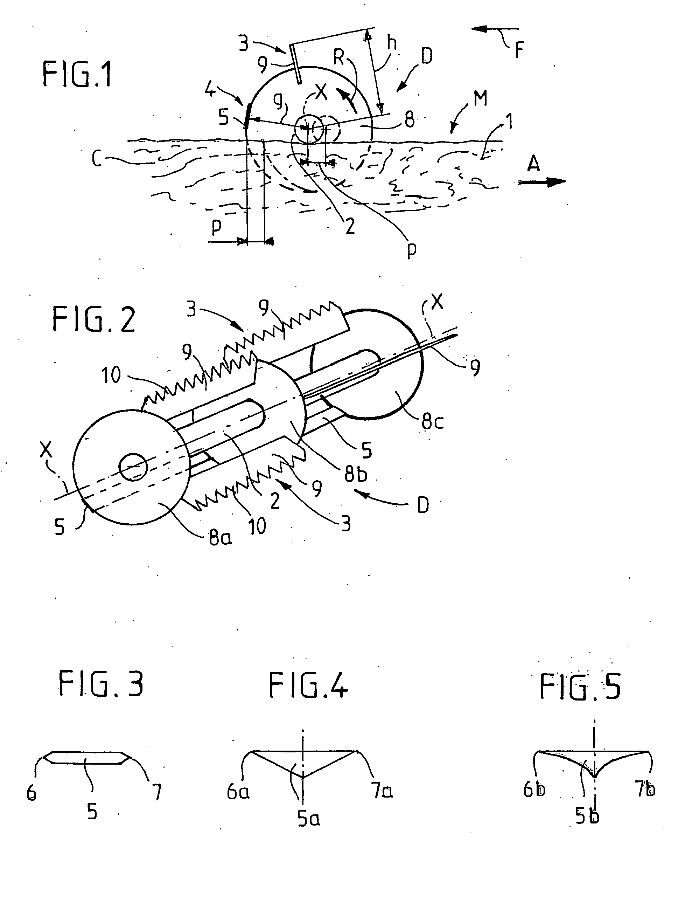

En se reportant à Fig.1 des dessins on peut voir un dispositif D pour le retournement et la translation d'un matériau pâteux M constitué par des boues 1 provenant de stations d'épuration d'eaux résiduaires urbaines ou industrielles. Cet exemple n'est pas limitatif et d'autres matériaux granuleux, pâteux, terreux ou pulvérulents peuvent être traités avec le dispositif D de l'invention.

Les boues 1 sont humides et doivent subir un traitement de séchage, avantageusement un séchage solaire. Les boues 1 sont épandues et progressent en couche C horizontale, de préférence sous une serre non représentée.

Le dispositif D comporte un arbre rotatif 2 supporté au-dessus de la couche C par des paliers, non représentés. L'arbre 2 est orienté transversalement, généralement orthogonalement, à la direction de translation A de la boue 1.

Le dispositif D comporte également un moyen de retournement 3 de la boue 1 assurant aussi son déplacement. Le moyen de retournement 3 est généralement entraîné en rotation dans le sens anti-horaire R par l'arbre 2 de manière à déplacer la boue 1 de la gauche vers la droite suivant la flèche A sur Fig.1. Le sens de rotation du moyen de retournement 3 peut occasionnellement être inversé, en fonction de caractéristiques particulières des boues en cours de traitement.

Le dispositif D comporte, selon l'invention, au moins un moyen de coupe 4 de la couche C de matériau, ce moyen 4 étant maintenu à distance radiale g de l'axe géométrique X de l'arbre rotatif 2 et étant entraîné en rotation par cet arbre. Le moyen de coupe 4 est sensiblement situé sur une surface cylindrique de révolution ayant même axe géométrique X que l'arbre 2. Le moyen de coupe 4 est propre à assurer, lors de sa rotation et de sa pénétration dans la couche C, la fragmentation de cette dernière, tandis que le moyen de retournement 3 déplace la tranche de boue découpée et la fait granuler.

Le moyen de coupe 4 est avantageusement formé par une lame de coupe 5 dont le plan est sensiblement tangent à une surface cylindrique de révolution d'axe X-X.

Plusieurs lames 5 peuvent être réparties angulairement autour de l'axe géométrique X-X, en restant tangentes à la surface cylindrique.

De préférence, les bords des lames de coupe sont affûtés des deux côtés de la lame. Une lame de coupe 5, comme illustrée sur Fig.3, présente alors un tranchant sur chacun de ses bords longitudinaux 6,7 parallèles à l'axe X-X. Selon l'exemple de Fig. 3, la section transversale de la lame 5 est rectangulaire et les deux bords longitudinaux 6,7 ont une section transversale en forme de dièdre dont l'arête constitue le tranchant.

Fig. 4 illustre une variante selon laquelle la lame présente une section transversale en forme de triangle isocèle dont la base est tournée radialement vers l'extérieur par rapport à l'axe X-X. Les bords 6a,7a de la base constituent les tranchants de la lame 5a.

Fig.5 montre une autre variante selon laquelle la lame 5b présente une face plane tournée vers l'extérieur et deux faces concaves tournées radialement vers l'intérieur, symétriques par rapport au plan médiateur de la face plane. Les tranchants sont formés par les arêtes 6b,7b.

Avec des lames de coupe 5,5a,5b comportant un tranchant sur chaque côté, le dispositif D peut être translaté, et travailler, aussi bien vers l'aval que vers l'amont de l'installation, c'est-à-dire vers la droite ou vers la gauche de Fig.1.

Généralement le dispositif D comporte des disques 8 (Fig.1) ou 8a,8b,8c (Fig.2) centrés sur l'axe géométrique X-X et orthogonaux à l'arbre 2 dont ils sont solidaires, notamment par soudage. Les disques 8, 8a,8b,8c sont espacés suivant la direction de l'axe X-X. Deux disques successifs tels que 8a,8b (Fig.2) déterminent entre eux un segment. Chaque lame de coupe 5 est fixée sur le pourtour des disques, tangentiellement à la surface cylindrique enveloppant les disques 8, 8a-8c. La forme du dispositif D avec disques 8, 8a-8c rappelle celle d'un tambour dont la paroi cylindrique est enlevée à l'exception des zones correspondant aux lames 5.

Le dispositif D peut être monocoque correspondant à un seul segment, ou être composé de plusieurs segments successifs. Sur Fig.2 deux segments sont déterminés par les trois disques 8a,8b,8c, afin d'augmenter la résistance mécanique du dispositif et de fournir des points de fixation aux lames de coupe 5 et aux moyens de retournement 3. Il y a au minimum une lame de coupe 5 et un moyen de retournement 3 par monocoque ou par segment.

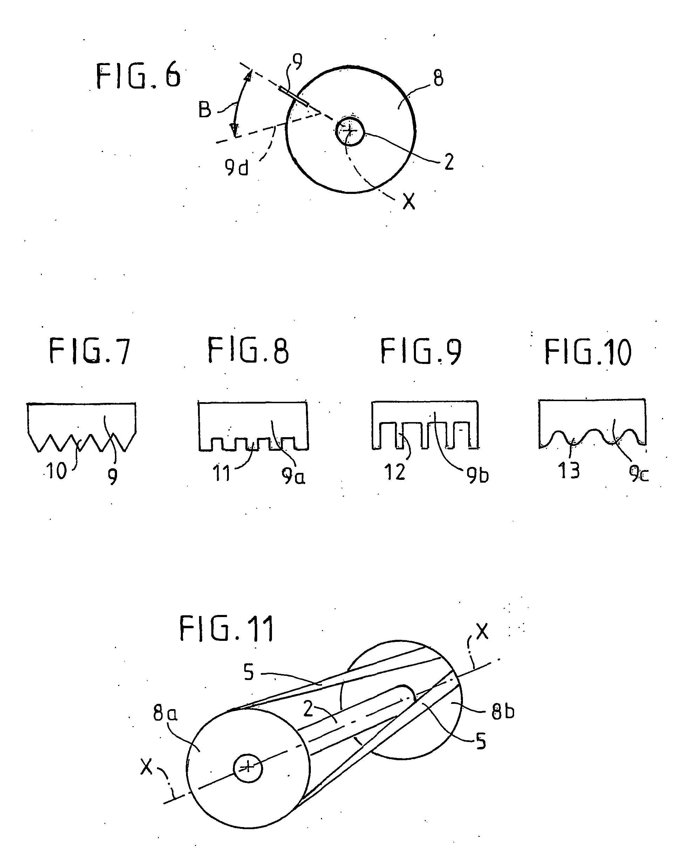

Le moyen de retournement 3 est avantageusement formé par un peigne gratteur 9 généralement orienté suivant la direction radiale par rapport à l'axe X, c'est-à-dire perpendiculairement à la surface cylindrique tangente aux lames 5. Le peigne 9 est constitué par une plaquette fixée à chaque extrémité à un disque tel que 8a,8b, notamment par soudage. Le bord radial extérieur du peigne 9 présente des dents 10 de forme triangulaire selon Fig.2 et Fig.7. La pointe des dents 10 se trouve à la distance radiale h (Fig.1) de l'axe X. Selon Fig.1 la distance h est supérieure à la distance g des lames 5 à l'axe X. On pourrait prévoir de monter les lames 5 à une distance g égale ou supérieure à h.

Fig. 8, 9 et 10 montrent des variantes de réalisation de peignes gratteurs 9a, 9b, 9c avec, respectivement, des dents 11 de forme sensiblement carrée, 12 de forme rectangulaire allongée, et 13 de forme arrondie.

La profondeur de l'espace entre les dents et l'écartement des dents sont choisis en fonction du type de boue 1 à traiter et de la surface de contact boue-air souhaitée.

En variante, les peignes gratteurs peuvent être montés comme illustré en 9d sur Fig. 6, selon un angle B par rapport à la direction radiale. Cet angle B peut atteindre 90°.

De préférence, le moyen de retournement 3, notamment le peigne gratteur 9, est disposé en arrière de la lame de coupe 5 selon le sens de rotation R de l'arbre rotatif 2, comme visible sur Fig.1. Le décalage angulaire vers l'arrière du peigne gratteur 9 par rapport à la lame 5 est généralement inférieur à 90°.

Les lames de coupe 5 peuvent être montées en biais par rapport à l'axe X comme illustré sur Fig.11. Les peignes gratteurs 9-9c (non représentés) peuvent également être montés en biais par rapport à l'axe X. Dans ce cas, afin d'assurer une translation rectiligne de la boue, on prévoit ou bien une symétrie de montage autour du centre du segment pour les éléments tels que lames de coupe 5 et peignes 9 portés par un segment, ou bien une symétrie de montage de deux segments successifs par rapport au plan de séparation orthogonal à l'axe géométrique.

Pour permettre une meilleure répartition des efforts mécaniques le long d'un dispositif D constitué de plusieurs segments, les lames 5 et peignes 9 d'un segment sont décalés angulairement par rapport à ceux du segment adjacent comme illustré sur Fig.2.

Les paliers de l'arbre 2 peuvent être montés fixes par rapport à un bâti. De préférence les paliers de l'arbre 2 sont montés mobiles en translation, par exemple suivant le sens de la flèche F de Fig.1, sous l'action de moyens d'entraînement non représentés ; dans ces conditions, lorsque la lame 5 retrouve une même position angulaire après avoir accompli un tour, l'arbre 2 s'est déplacé d'une distance p, de la position représentée en tirets sur Fig.1 à la position représentée en trait plein. La distance p correspond à l'écart entre les trajectoires de la lame 5 après un tour complet d'arbre 2. Cette distance p correspond à l'épaisseur de la tranche de matière découpée par la lame 5. Ces explications sont fournies dans le cas où une seule lame 5 est prévue par segment ; lorsque plusieurs lames 5 sont réparties sur la périphérie circulaire, l'épaisseur de la tranche dépend de la distance angulaire entre deux lames successives.

Du fait que les lames de coupe 5 sont montées tangentiellement à la surface cylindrique d'axe X, une tranche de boue est prélevée sans subir un mouvement de translation.

Ceci étant le fonctionnement et l'utilisation du dispositif sont les suivants.

Pour assurer le retournement et la translation de la boue 1, on commande l'entraînement en rotation de l'arbre 2 dans le sens anti-horaire R, par des moyens moteurs (non représentés). Les moyens d'entraînement en translation de l'arbre 2 suivant le sens de la flèche F sont également mis en action.

Les lames de coupe 5 pénètrent dans la boue 1 et la découpe par couches successives. A chaque rotation du tambour, chaque lame de coupe 5 tranche la boue sur une épaisseur déterminée p dépendant de la vitesse de rotation de l'arbre 2, de la vitesse de déplacement suivant la flèche F et du nombre de lames 5 réparties sur la périphérie. Le ou les peignes gratteurs 9 qui viennent derrière la lame 5 déplacent, dans le sens de la flèche A, la tranche de boue découpée et la font granuler. Les peignes gratteurs assurent le retournement, l'aération, la progression et la granulation du matériau.

Un automate est avantageusement prévu pour faire varier les vitesses de rotation et de translation, et ainsi l'épaisseur de coupe p.

Un tel dispositif convient particulièrement pour une installation destinée au séchage solaire, au séchage éolien, à l'incorporation et au mélange de terre ou de compost à des amendements ou des engrais.

Selon l'invention, la boue n'est plus uniquement pressée vers le bas par le moyen de retournement 3, mais est coupée et ramenée en surface par le moyen de coupe 4. Ainsi, au lieu de former une masse pâteuse, la boue granule. Par augmentation de la surface de la section de coupe, l'aération de la boue est améliorée, ce qui évite l'apparition de zones anaérobies et donc de mauvaises odeurs qui les accompagnent.

## Revendications

1. Dispositif pour le retournement et la translation d'un matériau (M) pâteux ou granuleux épandu en couche (C), en particulier une boue (1) provenant de station d'épuration d'eaux résiduaires urbaines ou industrielles, comprenant un arbre rotatif (2) supporté au-dessus de la couche de matériau, transversalement à la direction de translation du matériau, un moyen de retournement (3) du matériau s'étendant au moins en partie radialement par rapport à l'arbre (2) et entraîné en rotation par cet arbre pour pénétrer dans la couche, et un moyen de coupe (4) de la couche (C) de matériau, maintenu à distance radiale (g) de l'arbre rotatif (2) et entraîné en rotation par cet arbre, **caractérisé en ce que** le moyen de coupe (4) comprend au moins une lame de coupe (5) dont le plan est sensiblement tangent à une surface cylindrique ayant même axe géométrique que l'arbre rotatif, et étant propre à assurer, lors de sa pénétration dans la couche, la fragmentation de cette dernière, tandis que le moyen de retournement fait granuler et progresser le matériau découpé.

2. Dispositif selon la revendication 1, **caractérisé en ce que** la lame de coupe (5, 5a, 5b) présente un tranchant sur chacun de ses bords longitudinaux sensiblement parallèles à l'arbre rotatif.

3. Dispositif selon la revendication 1 ou 2, **caractérisé en ce que** des disques (8;8a,8b,8c) orthogonaux à l'arbre rotatif (2) sont solidaires de cet arbre et espacés suivant la direction de l'axe géométrique, et chaque lame de coupe (5) est fixée sur le pourtour des disques tangentiellement à la surface cylindrique enveloppant ces disques.

4. Dispositif selon la revendication 1, **caractérisé en ce que** chaque lame de coupe (5) comporte une section transversale symétrique.

5. Dispositif selon l'une des revendications précédentes, **caractérisé en ce que** le moyen de retournement (3) comprend au moins un peigne gratteur (9).

6. Dispositif selon la revendication 5, **caractérisé en ce que** le peigne gratteur (9) est disposé en arrière de la lame de coupe (5) selon le sens de rotation (R) de l'arbre rotatif.

7. Dispositif selon la revendication 5 ou 6, **caractérisé en ce que** le peigne gratteur (9) comporte un bord radial extérieur denté ou ondulé selon la granulation souhaitée et la surface d'échange air - matériau recherchée.

8. Dispositif selon la revendication 5 ou 6, **caractérisé en ce que** le peigne gratteur (9) est monté perpendiculairement à la surface cylindrique ou selon un angle (B) qui peut varier jusqu'à 90°.

9. Dispositif selon la revendication 5, **caractérisé en ce que** les lames de coupe (5) et les peignes gratteurs (9) sont disposés en biais par rapport à l'axe géométrique (X-X) de l'arbre (2).

10. Dispositif selon la revendication 9, **caractérisé en ce qu'**une symétrie de montage des lames et peignes gratteurs est prévue pour assurer une translation rectiligne du matériau (M).

11. Dispositif selon la revendication 5, **caractérisé en ce que** les lames de coupe (5) et les peignes gratteurs (9) prévus dans des segments successifs situés entre des disques (8a,8b,8c) orthogonaux à l'arbre rotatif (2) sont décalés angulairement les uns par rapport aux autres.

12. Dispositif selon la revendication 5, **caractérisé en ce qu'**il comporte un automate commandant notamment les vitesses de rotation et de translation des lames de coupe (5) et des peignes gratteurs (9), et **en ce que** l'épaisseur (p) de matériau découpée par les lames de coupe (5)est réglée par l'automate.

## Claims

1. Device for turning and translating a pasty or granular material (M) spread in a layer (C), in particular a sludge (1) coming from an urban or industrial waste water purification station, comprising a rotary shaft (2) supported above the layer of material, transversely to the translation direction of the material, a means (3) of turning the material extending at least partly radially with respect to the shaft (2) and driven in rotation by this shaft in order to penetrate the layer, and a means (4) of cutting the layer (C) of material, maintained at a radial distance (g) from the rotary shaft (2) and driven in rotation by this shaft, **characterised in that** the cutting means (4) comprises at least one cutting blade (5), the plane of which is substantially tangent to a cylindrical surface having the same geometric axis as the rotary shaft, and being able to provide, when it penetrates the layer, the fragmentation of the latter, while the turning means causes the cut material to be granulated and to move forwards.

2. Device according to claim 1, **characterised in that** the cutting blade (5, 5a, 5b) has a cutting edge on each of its longitudinal edges substantially parallel to the rotary shaft.

3. Device according to claim 1 or 2, **characterised in that** discs (8; 8a, 8b, 8c) orthogonal to the rotary shaft (2) are fixed to this shaft and spaced apart in the direction of the geometric axis, and each cutting blade (5) is fixed to the periphery of the discs tangentially to the cylindrical surface enveloping these discs.

4. Device according to claim 1, **characterised in that** each cutting blade (5) has a symmetrical transverse section.

5. Device according to one of the preceding claims, **characterised in that** the turning means (3) comprises at least one scraper comb (9).

6. Device according to claim 5, **characterised in that** the scraper comb (9) is disposed at the rear of the cutting blade (5) in the direction of rotation (R) of the rotary shaft.

7. Device according to claim 5 or 6, **characterised in that** the scraper comb (9) has a toothed or corrugated external radial edge according to the required granulation and the air/material exchange surface sought.

8. Device according to claim 5 or 6, **characterised in that** the scraper comb (9) is mounted perpendicular to the cylindrical surface or at an angle (B) that can vary up to 90°.

9. Device according to claim 5, **characterised in that** the cutting blades (5) and the scraper combs (9) are disposed aslant with respect to the geometric axis (X-X) of the shaft (2).

10. Device according to claim 9, **characterised in that** a symmetry of mounting of the blades and scraper combs is provided to ensure rectilinear translation of the material (M).

11. Device according to claim 5, **characterised in that** the cutting blades (5) and the scraper combs (9) provided in successive segments situated between discs (8a, 8b, 8c) orthogonal to the rotary shaft (2) are offset angularly with respect to one another.

12. Device according to claim 5, **characterised in that** it comprises an automatic controller controlling in particular the speeds of rotation and translation of the cutting blades (5) and scraper combs (9), and **in that** the thickness (p) of material cut by the cutting blades (5) is regulated by the automatic controller.

## Patentansprüche

1. Vorrichtung zum Umwälzen und Vorwärtsbewegen eines zu einer Schicht (C) ausgebreiteten pastösen oder körnigen Materials (M), insbesondere eines Schlamms (1), der von einer Anlage zur Klärung von städtischem oder industriellem Abwasser kommt, welche eine Welle (2), die über der Materialschicht quer zur Richtung der Vorwärtsbewegung des Materials getragen wird, ein Mittel (3) zum Umwälzen des Materials, das sich wenigstens teilweise radial zur Welle (2) erstreckt und von dieser Welle in Umdrehung versetzt wird, um in die Schicht einzudringen, und ein Mittel (4) zum Zerschneiden der Materialschicht (C), das in radialer Entfernung (g) von der Welle (2) gehalten und von dieser Welle in Umdrehung versetzt wird, umfasst, **dadurch gekennzeichnet, dass** das Schneidmittel (4) mindestens ein Schneidmesser (5) umfasst, dessen Ebene im Wesentlichen tangential zu einer zylindrischen Oberfläche ist, die dieselbe geometrische Achse wie die Welle besitzt, und welche geeignet ist, bei seinem Eindringen in die Schicht deren Zerkleinerung sicherzustellen, während das Umwälzmittel das zerschnittene Material granuliert und vorwärtsbewegt.

2. Vorrichtung nach Anspruch 1, **dadurch gekennzeichnet, dass** das Schneidmesser (5, 5a, 5b) eine Schneide auf jedem seiner Längsränder, die im Wesentlichen parallel zur Welle stehen, aufweist.

3. Vorrichtung nach Anspruch 1 oder 2, **dadurch gekennzeichnet, dass** die zu der Welle (2) orthogonalen Scheiben 8; 8a, 8b, 8c) mit dieser Welle fest verbunden und in der Richtung der geometrischen Achse voneinander beabstandet sind und jedes Schneidmesser (5) auf dem Umfang der Scheiben tangential zu der diese Scheiben umhüllenden zylindrischen Oberfläche befestigt ist.

4. Vorrichtung nach Anspruch 1, **dadurch gekennzeichnet, dass** jedes Schneidmesser (5) einen symmetrischen Querschnitt umfasst.

5. Vorrichtung nach einem der vorhergehenden Ansprüche, **dadurch gekennzeichnet, dass** das Umwälzmittel (3) mindestens einen Kratzkamm (9) umfasst.

6. Vorrichtung nach Anspruch 5, **dadurch gekennzeichnet, dass** der Kratzkamm (9) in Umdrehungsrichtung (R) der Welle hinter dem Schneidmesser (5) angeordnet ist.

7. Vorrichtung nach Anspruch 5 oder 6, **dadurch gekennzeichnet, dass** der Kratzkamm (9) einen gezackten oder gewellten radialen Außenrand je nach der gewünschten Granulierung und der gewünschten Luft/Material-Austauschfläche umfasst.

8. Vorrichtung nach Anspruch 5 oder 6, **dadurch gekennzeichnet, dass** der Kratzkamm (9) senkrecht zu der zylindrischen Oberfläche oder mit einem Winkel (B), der bis zu 90° variieren kann, angebracht ist.

9. Vorrichtung nach Anspruch 5, **dadurch gekennzeichnet, dass** die Schneidmesser (5) und die Kratzkämme (9) in Bezug auf die geometrische Achse (X-X) der Welle (2) schräg angeordnet sind.

10. Vorrichtung nach Anspruch 9, **dadurch gekennzeichnet, dass** eine Befestigungssymmetrie der Messer und Kratzkämme vorgesehen ist, um eine gerade Vorwärtsbewegung des Materials (M) sicherzustellen.

11. Vorrichtung nach Anspruch 5, **dadurch gekennzeichnet, dass** die Schneidmesser (5) und die Kratzkämme (9) in aufeinander folgenden Abschnitten vorgesehen sind, die sich zwischen den zu der Welle (2) orthogonalen Scheiben (8a, 8b, 8c) befinden und in Bezug aufeinander winklig versetzt sind.

12. Vorrichtung nach Anspruch 5, **dadurch gekennzeichnet, dass** sie einen Automaten umfasst, der insbesondere die Umdrehungs- und die Translationsgeschwindigkeit der Schneidmesser (5) und der Kratzkämme (9) steuert, **und dass** die Dicke (p) des von den Schneidmessern (5) zerschnittenen Materials von dem Automaten geregelt wird.
